Europäisches Patentamt

European Patent Office

Office européen des brevets

(19)

(11) Numéro de publication: **0 149 947**
**B1**

# (12) FASCICULE DE BREVET EUROPEEN

(45) Date de publication du fascicule du brevet:
**27.01.88**

(21) Numéro de dépôt: **84402737.5**

(22) Date de dépôt: **27.12.84**

(51) Int. Cl.⁴: **F 42 B 15/033**, F 02 K 9/90

(54) Propulseur à gaz pour projectile guidé.

(30) Priorité: **06.01.84 FR 8400172**

(43) Date de publication de la demande:
**31.07.85 Bulletin 85/31**

(45) Mention de la délivrance du brevet:
**27.01.88 Bulletin 88/4**

(84) Etats contractants désignés:
**AT BE CH DE GB IT LI LU NL SE**

(56) Documents cités:
**EP - A - 0 112 755**
**US - A - 2 974 594**
**US - A - 3 058 489**
**US - A - 3 599 899**
**US - A - 3 721 402**
**US - A - 4 017 040**

(73) Titulaire: **THOMSON BRANDT ARMEMENTS, 52, avenue des Champs Elysées, F-75008 Paris (FR)**

(72) Inventeur: **Metz, Pierre, THOMSON-CSP SCPI - 173, bld Haussmann, F-75379 Paris Cedex 08 (FR)**

(74) Mandataire: **Trocellier, Roger et al, THOMSON-CSF SCPI 19, avenue de Messine, F-75008 Paris (FR)**

ACTORUM AG

## Description

La présente invention se rapporte aux projectiles guidés et elle concerne un propulseur à gaz mettant en oeuvre un propergol solide et comprenant une pluralité de tuyères dont le débit relatif peut être varié pour modifier la trajectoire de vol du projectile.

La capacité de manoeuvre des cibles offensives est constamment améliorée, il en résulte que l'erreur d'interception, ou distance de passage des projectiles augmente en conséquence. Au cours du tir d'un projectile on doit considérer la phase de croisière pendant laquelle il est souhaitable de maintenir la vitesse de déplacement du projectile et la phase terminale pendant laquelle l'erreur de trajectoire mesurée doit être annulée ou tout au moins réduite à une valeur compatible avec le rayon d'efficacité de la charge militaire, lequel peut-être nul dans le cas d'une charge creuse.

Dans un projectile guidé, il est avantageux pour des raisons notamment, de poids et de coût du système d'armes que les moyens permettant de maintenir la vitesse de déplacement et les moyens permettant de dévier la trajectoire du projectile soient combinés dans un propulseur unique. Si l'on considère maintenant le choix du type de propergol, liquide ou solide, on constate que celui-ci est dicté par les contraintes opérationnelles, lesquelles conduisent à opter pour les propergols solides du fait de leur capacité de stockage prolongé. Par contre une difficulté inhérente à l'emploi de propergols solides résulte du fait qu'une fois la combustion totalement amorcée, la pression de combustion doit se maintenir dans des limites relativement étroites. Une baisse de la pression de combustion, résultant d'un débit de gaz trop important conduit à l'extinction du propulseur. Inversement, un accroissement de la pression de combustion résultant d'une réduction des débits de gaz provoque l'explosion intempestive du propulseur.

D'une façon générale, il est connu de dévier un projectile de sa trajectoire de vol, en contrôlant le débit relatif des jets de gaz fournis par un ensemble de tuyères judicieusement disposées à la périphérie du corps du projectile. Il est également connu d'incliner les tuyères vers l'arrière du projectile pour créer conjointement une force de poussée longitudinale et une force de poussée latérale.

Il a déjà été proposé des propulseurs à propergol solide destinés à fournir deux composantes de force mutuellement orthogonales: une force de poussée longitudinale de grandeur fixe et une force de poussé latérale contrôlée en grandeur et en direction. Les propulseurs de guidage à propergol solide peuvent être répartis dans deux classes distinctes, selon le mode de fonctionnement des moyens de contrôle du débit relatif des jets de gaz des tuyères. Dans une première classe, comme décrit dans le brevet américain n° 4 017 040 chaque paire de tuyères diamétralement opposées est équipée d'une valve ayant trois positions stables: une première et une seconde positions pour lesquelles le flux de gaz est dirigé dans l'une et l'autre tuyères et une troisième position pour laquelle le débit de gaz est également réparti entre les deux tuyères. Dans la seconde classe, illustrée par le dispositif décrit dans la demande de brevet EP-A-0 112 755, chaque paire de tuyères est équipée d'une valve ayant deux positions stables et opérant selon un cycle alternatif «tout ou rien». En variant le rapport cyclique d'ouverture de la valve, le flux de gaz peut être réparti à la demande entre les deux tuyères diamétralement opposées.

Les propulseurs à gaz de l'art antérieur ne permettent pas de répondre de façon satisfaisante au problème que pose la conception d'un propulseur à gaz pour projectile guidé. Le but de l'invention est de fournir un propulseur à gaz dont les régimes de fonctionnement diffèrent selon que le projectile est dans la phase croisière de sa trajectoire ou dans la phase de guidage terminal sur la cible.

L'objet de l'invention est un propulseur à gaz pour projectile guidé, ayant au moins une paire de tuyères latérales diamétralement opposées pour créer des forces de poussée inclinées vers l'arrière du projectile. Ce projectile comprend un pain de propergol solide, relativement peu sensible à la pression de combustion, qui est disposé dans une chambre de combustion est couplée aux tuyères latérales, et des valves ayant deux positions stables qui sont contrôlées par des circuits de commande permettant d'inhiber l'état correspondant à la fermeture simultanée de deux tuyères d'une même paire.

Selon une autre caractéristique de l'invention les valves d'une paire de tuyères sont accouplées par un moyen mécanique de sécurité pour pallier une avarie des valves ou de leurs circuits de commande, afin d'éviter à l'explosion intempestive du propulseur.

L'invention sera mieux comprise à la lecture de la description détaillée qui va suivre d'une forme de réalisation du propulseur à gaz, faite en regard de dessins annexés, dans lesquels:

la figure 1 se rapporte à l'art antérieur et rerpésente un propulseur à gaz dans lequel sont incluses des valves à trois positions stables;

la figure 2 se rapporte également à l'art antérieur et représente un propulseur à gaz dans lequel sont incluses des valves à deux positions stables;

la figure 3 est une vue en coupe longitudinale partielle qui montre une forme de construction d'un propulseur à gaz selon l'invention;

la figure 4 sous une forme schématique montre une forme de réalisation des circuits de commande des valves d'ouverture-fermeture des cols de tuyères;

la figure 5a représente une première forme de construction du moyen mécanique de sécurité destiné à interdire l'obturation simultanée des cols de tuyères;

la figure 5b montre une variante de construction des moyens mécaniques de sécurité de la figure 5a;

la figure 6a représente une seconde forme de construction du moyen mécanique de sécurité;

la figure 6b représente une variante de construction du moyen mécanique de sécurité de la figure 6a;

la figure 7 montre l'arrangement des valves d'ouverture-fermeture des tuyères dans un propulseur à gaz ayant deux paires de tuyères.

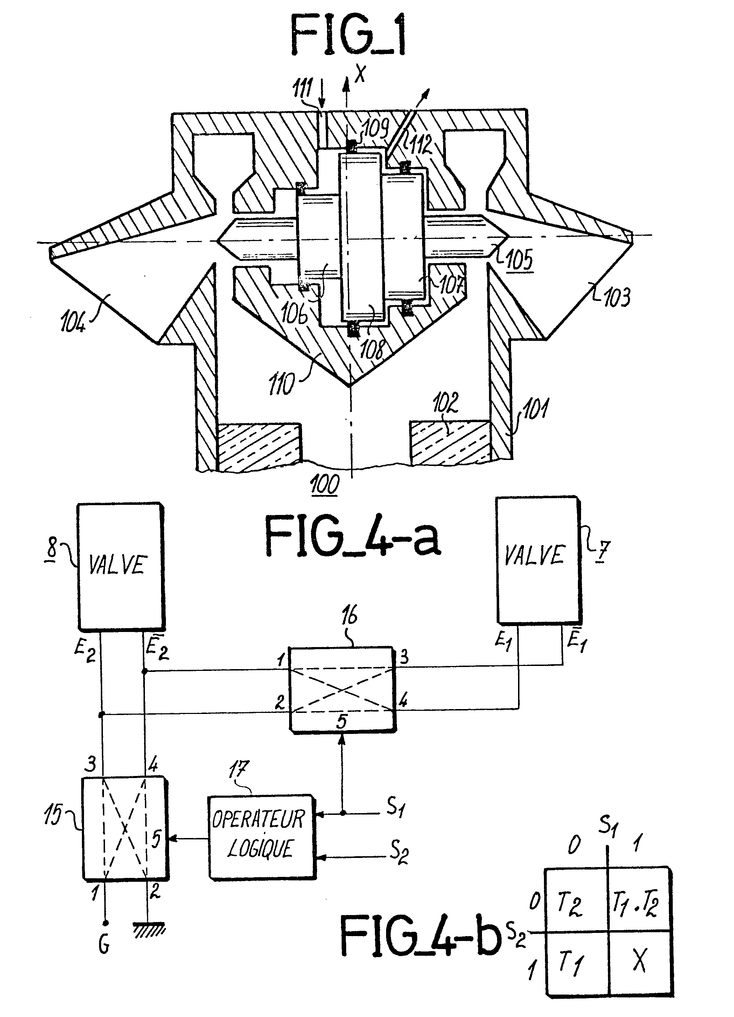

La figure 1 se rapporte à l'art antérieur et représente selon une vue en coupe longitudinale un propulseur à gaz dans lequel est incluse une valve à trois positions stables. Ce propulseur 100 est constitué par un corps cylindrique creux 101 qui renferme un bloc 102 d'un propergol solide et à l'extrémité de ce corps sont disposées deux paires de tuyères diamétralement opposées, dont une seule paire est montrée sur la figure. Le débit relatif du gaz s'échappant par les tuyères opposées 103 et 104 est commandé par une valve pneumatique 105 de forme cylindrique et cette valve peut occuper trois positions stables. A cet effet, la valve comporte, dans sa partie médiane, trois segments cylindriques adjacents de sections différentes: un segment 106 de faible section et un segment 107 de section moyenne, lesquels sont disposés de part et d'autre d'un segment 108 de plus forte section. L'étanchéité de chacun de ces segments est assurée par des joints circulaires 109 disposés dans des gorges correspondantes situées dans le corps 110 de la valve. En regard des faces du segment médian 108 de plus forte section sont disposés un premier orifice 111 qui reçoit une pression de commande et un second orifice 112 qui débouche à l'extérieur. Lorsque la pression de commande appliquée à l'orifice 111 à une valeur nulle, la valve 105 obture l'ouverture d'entrée de la tuyère 104, et inversement lorsque cette pression de commande à une valeur maximale la valve obture l'ouverture d'entrée de la tuyère 103. Par un choix judicieux de la pression de commande, la valve peut occuper une position centrale pour laquelle le flux de gaz du générateur est également réparti entre les deux tuyères.

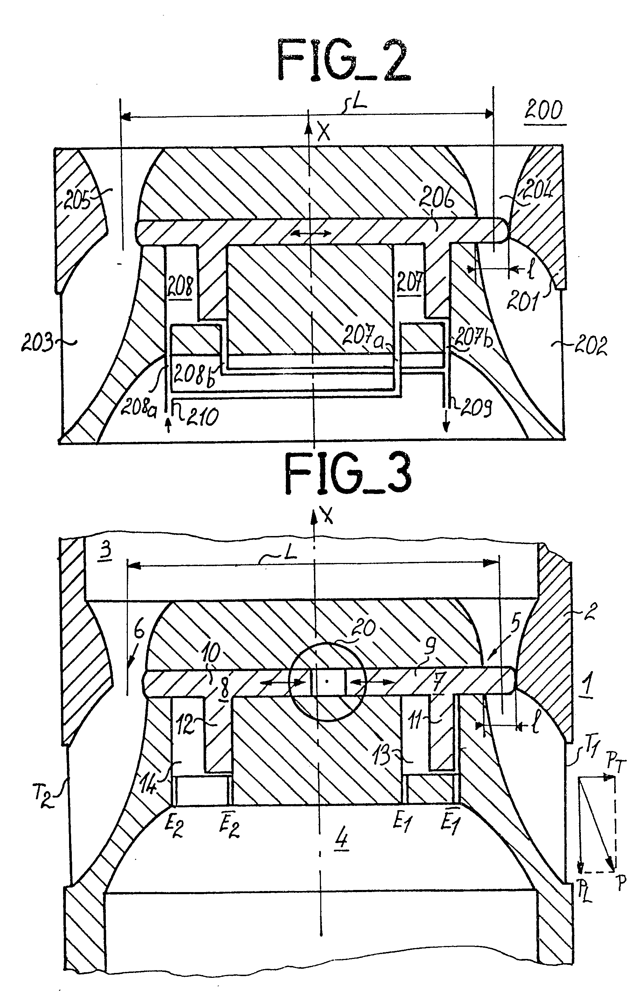

La figure 2 se rapporte également à l'art antérieur et représente, selon une vue en coupe un propulseur à gaz dans lequel est incluse une valve à deux positions stables. Seule la section du propulseur comprenant les tuyères et les moyens de commande du flux de gaz à été représentée. Cette section de forme cylindrique comprend un corps dans lequel est disposé au moins une paire de tuyères 202 et 203 diamétralement opposées. Ces tuyères sont couplées au générateur de gaz par des conduits de gaz indépendants 204 et 205, dont l'entre-axe à une valeur déterminée $L$. Une barre coulissante 206 permet d'obturer alternativement les conduits de gaz des tuyères. Cette barre coulissante est équipée de deux vérins pneumatiques 207 et 208 pouvant occuper deux positions extrêmes, la course totale de ces vérins est égale à la largeur $l$ des conduits de gaz. Ces vérins comportent des orifices d'entrée-sortie 207a, 207b et 208a, 208b qui sont reliées deux à deux en parallèle et reçoivent à un signal pneumatique de commande qui est appliqué à leurs entrées respectives 209 et 210. Ce signal de commande est un signal cyclique en créneaux dont la fréquence de cycle est relativement élevée. Si l'on varie le rapport cyclique d'ouverture (R.C.O) des conduits de gaz, le débit relatif du flux de gaz traversant les tuyères peut être réglé. Ainsi lorsque la valeur du R.C.O est égale à un demi, les flux de gaz sont également répartis dans les deux tuyères opposées.

La figure 3 est une vue en coupe partielle qui montre une forme de construction d'un propulseur à gaz conforme à l'invention. Sur cette figure 3 sont représentées, uniquement, les parties du propulseur se rapportant aux tuyères latérales et aux moyens de commande du débit relatif du flux de gaz traversant les tuyères. Le corps 2 du propulseur 1 est de forme cylindrique, et son axe de révolution, ou axe longitudinal X, est orienté vers l'avant du projectile. Le générateur de gaz 3 est constitué par un pain de propergol solide, lequel est disposé dans une chambre de combustion adjacente au bloc des tuyères 4. Le générateur de gaz ne fait pas partie de l'invention et sa construction ne sera pas décrite puisqu'elle est largement connue en soi. Le bloc des tuyères 4 comporte au moins une paire de tuyères $T_1$, $T_2$ diamétralement opposées, mais plus généralement, il comporte deux paires de tuyères mutuellement orthogonales comme il sera décrit ultérieurement. Les tuyères sont situées à la périphérie du corps du propulseur et convenablement inclinées pour créer des forces de poussée dirigées vers l'arrière du projectile. Il en résulte que le rapport des grandeurs respectives des composantes longitudinale $P_L$ et transversale $P_T$ sont parfaitement connues. Les tuyères du type convergente-divergente comprenne un col des tuyères 5, 6 par exemple, de section rectangulaire de largeur $l$ et de hauteur $h$, et l'entre-axe de ces cols de tuyères à une valeur L. En regard de cols de tuyères sont disposées des valves $7$ et $8$ d'ouverture-fermeture des tuyères. Une valve est constituée par une palette coulissante 9 ou 10, et la section de la palette est égale à celle du col de tuyères. Les déplacements de la palette, indiqués par une flèche double sont assurés par un actuateur pneumatique comprenant un piston 11 ou 12 et une cavité étanche 13 ou 14 muni de deux orifices d'entrée/sortie $E_1$, $E_1$ et $E_2$, $E_2$ qui sont situés de part et d'autre du piston. La course de la palette peut être réglée à valeur $1$ correspondant à la largeur de la tuyère, il en résulte que chacune des tuyères peut être complètement ouverte ou fermée. Les orifices d'entrée/sortie de la cavité des actuateurs sont connectés à des circuits de commande électro-pneumatique afin de contrôler la position des palettes des valves. Lorsque la pression du fluide de commande à l'orifice $\bar{E}_1$ est au niveau haut, la pression du fluide à l'orifice $E_1$ est au niveau bas, alors, la palette 9 obture le col de tuyère. Inversement, si la pression de commande à l'orifice $E_1$ est au niveau bas et la pression de commande à l'orifice $E_1$ est au niveau haut, alors, la palette 9 est rétractée et le col de tuyère est libre. Le fonctionnement de la valve $8$ est identique à celui de la valve $7$ comme décrit ci-dessus. Le positionnement des valves $7$ et $8$ ne doit pas être indépendant et l'obturation simultanée des deux cols de tuyère doit être inhibée.

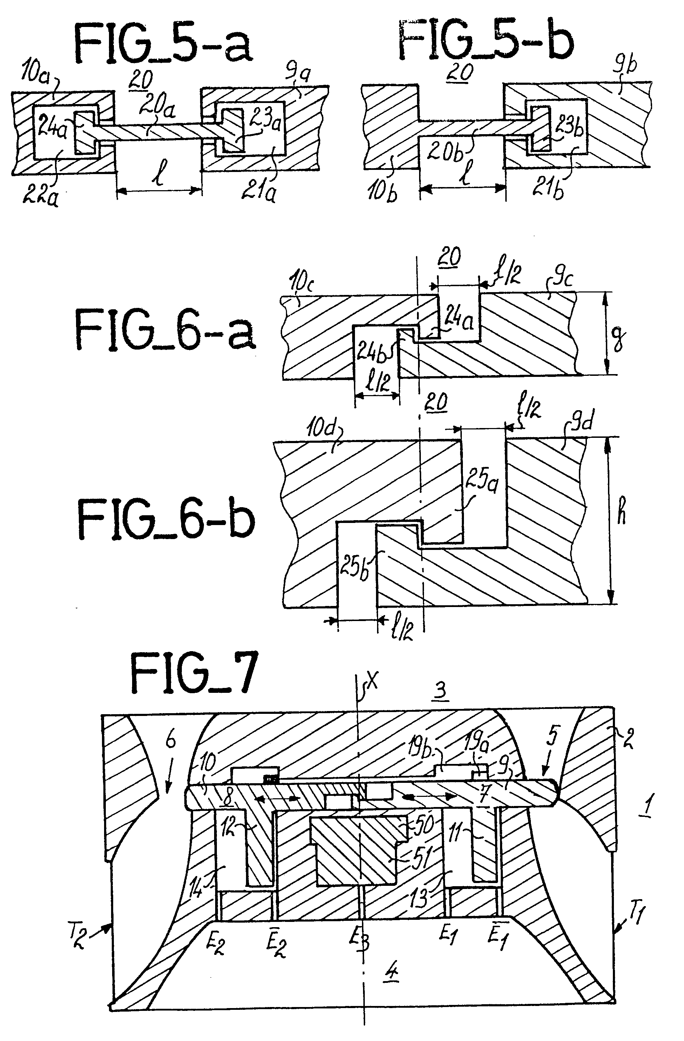

On se réfère maintenant à la figure 4a qui représente schématiquement une forme de réalisation des circuits de commande des valves de fermeture-ouverture des tuyères. Une source de gaz G, par exemple, celle fournie par le propulseur, est connectée à l'entrée 1 d'un premier permutateur pneumatique 15 dont l'entrée 2 est connectée à un chemin de fuite. Les sorties de ce permutateur pneumatique sont connectées à deux conditions de gaz qui sont reliés directement à la valve $8$ de la tuyère $T_2$ et, indirectement, par l'intermédiaire d'un second permutateur pneumatique 16 à la valve $7$ de la tuyère $T_1$. La fonction du second permutateur 16 est dans un premier état de connecter les orifices $E_1$ et $E_2$, $\bar{E}_1$ et $\bar{E}_2$

d'entree/sortie des valves afin que les palettes des valves puissent être déplacées dans une même direction, et dans un second état de croiser les liaisons entre les valves afin que les palettes puissent être déplacées dans des directions inverses. La fonction du premier permutateur 15 est d'inverser directions de déplacement des palettes des valves. L'entrée de commande 5 du second permutateur 16 reçoit un premier signal de commande $S_1$ à deux états et l'entrée de commande 5 du premier permutateur 15 reçoit le signal de commande $S_1$ et un second signal de commande $S_2$ à deux états, par l'intermédiaire d'un opérateur logique 17 dont la table de vérité est donnée à la figure 4b et indique les états d'ouvertures des tuyères $T_1$ et $T_2$. La fonction de cet opérateur logique est d'interdire l'état correspondant à l'obturation simultanée des tuyères $T_1$ et $T_2$.

Il est important que toute avarie qui pourrait éventuellement survenir en aval des circuits de commande des valves 7 et 8 ne puisse conduire à l'obturation simultanée des deux tuyères et, par voie de conséquence, à l'explosion du propulseur. Sur la figure 3 on a représenté symboliquement par un cercle 20 un moyen de sécurité permettant de pallier l'avarie des valves, mais également une avarie des circuits de commande de ces valves. Ce moyen de sécurité consiste en un «attelage» des palettes des valves qui permet que la distance entre les extrémités des palettes 9 et 10 ne puisse en aucun cas dépasser la valeur L correspondant à l'entre-axe des cols de tuyères.

La figure 5a représente une première forme de réalisation du moyen de sécurité 20. Les extrémités en regard des palettes 9a et 10a des valves comportent chacune une cavité 21a et 22b dans lesquelles est engagée une tige de liaison 20a munie de butée d'arrêt 23a et 24a.

La figure 5b représente une variante de construction du moyen de sécurité 20 décrit à la figure 5a. Selon cette variante l'une des extrémités en regard des palettes 9b ou 10b comporte une cavité 21b dans laquelle s'engage une tige 20b solidaire de la palette opposée 10b; cette tige étant munie d'une butée d'arrêt 23b. Ce dispositif d'accouplement des palettes constitue un attelage mécanique rétractable.

La figure 6a représente un second mode de construction du moyen de sécurité 20. Les extrémités en regard des palettes coulissantes 9c et 10c des valves comportent des crochets d'arrêt 24a et 24b, lesquelles sont disposés dans le plan de la plus faible dimension g des palettes. Ces crochets d'arrêt s'imbriquent mutuellement afin de limiter les déplacements relatifs des palettes.

La figure 6b représente une variante de construction du moyen de sécurité décrit à la figure 6a. Cette variante de construction consiste à disposer les crochets d'arrêt 25a et 25b dans le plan de plus grande dimension h des palettes coulissantes 9d et 10d des valves.

Dans les formes de réalisation du moyen de sécurité 20 qui viennent d'être décrites, les déplacements relatifs des extrémités des palettes coulissantes qui sont situées dans les cols de tuyaux sont limités à la valeur L correspondante à l'entre-axe des cols de tuyère et à la valeur (L–l). Toutefois, il faut noter, que les butées des palettes peuvent être fournies par des moyens auxiliaires dipsosés sur les faces des palettes.

La section de passage du flux de gaz varie donc entre la valeur (l.h) lorsque l'une des tuyères est fermée et la valeur 2 (l.h) lorsque des deux tuyères sont ouvertes. Il en résulte que la pression de combustion $P_c$ du propergol solide du générateur de gaz chute lorsque l'on ouvre conjointement les deux cols de tuyères. Cette chute de la pression de combustion ne doit pas entraîner l'extinction du propergol, pour ce faire on met en oeuvre un propergol composite moins sensible à la pression de combustion que les propergols classiques. On peut par exemple utiliser un propergol connu sous la dénomination «BUTALITE 82.05» produit en France par la société SNPE (Société Nationale des Poudres et Explosifs). Il en résulte que durant la phase de croisière du projectile pendant laquelle toutes les tuyères sont ouvertes, la section de passage du flux de gaz est doublée, la vitesse de combustion du propergol est réduite et par voie de conséquence les forces de poussées sont plus faibles et la résultante des composantes transverses $P_T$ ayant une valeur nulle, il n'y a pas d'effet de pilotage, seule les composantes Px longitudinales sont utilisées pour réaliser la fonction moteur de croisière. Durant la phase de pilotage du projectile, la vitesse de combustion est augmentée du fait de l'obturation de l'un des cols de tuyères, il s'en suit un accroîssement de la force de poussée P et une force de poussée transverse $P_T$.

La figure 7 est une vue en coupe du bloc des tuyères qui représente l'arrangement des valves d'ouverture-fermeture d'un propulseur à gaz ayant deux paires de tuyères mutuellement orthogonales pour assurer le pilotage du projectile guidé dans deux plans perpendiculaire entre eux. Sur cette figure 7 on aperçoit uniquement la palette coulissante 50 de l'une des valves, le piston 51 de l'actuateur pneumatique correspondant et l'un des orifices d'entrée/sortie $E_3$. La figure 7 illustre également une forme de réalisation des butées d'arrêt des palettes coulissantes des valves d'ouverture-fermeture des cols de tuyères. Une butée d'arrêt est constituée par un ergot 19a disposé sur l'une des faces de la palette; cet ergot s'engage dans une cavité 19b correctement dimensionnée pour limiter la course de la palette coulissante à la valeur 1 correspondant à la largeur du col de tuyère.

La construction du propulseur a été décrite à titre illustratif, mais non limitatif. Notamment: la position des valves des tuyères peut être déplacée en fonction de la forme physique des tuyères; les actuateurs pneumatiques peuvent être remplacés par des actuateurs hydrauliques et éventuellement électriques.

Le propulseur à gaz trouve son application dans les projectiles guidés qui sont propulsés durant la phase croisière de leur trajectoire.

## Revendications

1. Propulseur à gaz (1) pour projectile guidé, ayant au moins une paire de tuyères latérales ($T_1$, $T_2$ diamétralement opposées pour créer des forces de poussée inclinées sur l'arrière du projectile, caractérisé en ce qu'il comprend un pain de propergol solide (<u>3</u>), peu sensible à la pression de combustion, lequel est disposé dans une chambre de combustion qui est couplée aux tuyères latérales, et des valves d'ouverture-fermeture (7-8) des orifices d'entrée (E) de chacune des tuyères latérales, ces valves (7, 8) étant des éléments coulissants munis d'actuateurs (12-14) à deux positions stables, qui sont contrôlés par des circuits de commande (15, 16) comportant un opérateur logique (17) permettant d'inhiber l'état des valves correspondant à la fermeture simultanée de deux tuyères d'une même paire.

2. Propulseur selon la revendication 1, caractérisé en ce que les éléments coulissants (9, 10) sont des palettes diamétralement opposées qui incluent un moyen mécanique de sûreté (20) pour limiter le déplacement relatif de ces palettes.

3. Propulseur selon la revendication 2, caractérisé en ce que le moyen mécanique de sûreté (20) des palettes des valves (6, 8) est constitué par des crochets (24, 25) placés sur les extrémités en regard de ces palettes, ces crochets s'imbriquant l'un dans l'autre.

4. Propulseur selon la revendication 2, caractérisé en ce que le moyen mécanique de sûreté (20) des palettes (9, 10) des valves (7, 8) est constitué par un attelage mécanique rétractable.

5. Propulseur selon la revendication 1, caractérisé en ce que propergol solide (<u>3</u>) est un propergol composite.

**Patentansprüche**

1. Gasdüsenantrieb (1) für ein lenkbares Geschoss mit wenigstens zwei diametral gegenüberliegenden seitlichen Düsen ($T_1$, $T_2$) zur Erzeugung von schräg hinter das lenkbare Geschoss gerichteten Schubkräften, gekennzeichnet durch einen für den Verbrennungsdruck wenig empfindlichen Feststofftreibsatz (3), der in einer Brennkammer angebracht ist, die mit den seitlichen Düsen in Verbindung steht, und Öffnungs/Schliess-Absperrorgane (7, 8) an Einlassöffnungen (E) jeder der seitlichen Düsen, wobei diese Absperrorgane (7, 8) aus Gleitelementen bestehen, die mit Betätigungsorganen (12-14) mit zwei stabilen Positionen versehen sind und die von Steuerschaltungen (15, 16) gesteuert sind, die ein Logikglied (17) enthalten, das es ermöglicht, den gleichzeitigen Schliesszustand von zwei Düsen eines Paars zu verhindern.

2. Antrieb nach Anspruch 1, dadurch gekennzeichnet, dass die Gleitelemente (9, 10) diametral gegenüberliegende Schieber sind, die ein mechanisches Sicherheitsmittel (20) zur Begrenzung der Relativverschiebung dieser Schieber enthalten.

3. Antrieb nach Anspruch 2, dadurch gekennzeichnet, dass das mechanische Sicherheitsmittel (20) der Schieber der Absperrorgane (7, 8) von Haken (24, 25) gebildet ist, die an den einander zugewandten Enden der Schieber angebracht sind und ineinander eingreifen.

4. Antrieb nach Anspruch 2, dadurch gekennzeichnet, dass das mechanische Sicherheitsmittel (20) der Schieber (9, 10) der Absperrorgane (7, 8) von einer mechanischen zurückziehbaren Kupplung gebildet ist.

5. Antrieb nach Anspruch 1, dadurch gekennzeichnet, dass der Feststofftreibsatz (3) ein zusammengesetzter Treibsatz ist.

**Claims**

1. Gas jet propulsion (1) for a guided projectile having at least two diametrically opposite lateral nozzles ($T_1$, $T_2$) for generating inclining thrusts at the back of the guided projectile, characterized by a solid propellant (3) of low sensitiveness to the combustion pressure and arranged in a combustion chamber which communicates with the lateral nozzles, and opening/closure valves (7, 8) at inlet openings (E) at each of the lateral nozzles, said valves (7, 8) consisting of slide elements which are provided with actuators (12-14) having two stable positions and which are controlled by control circuits (15, 16) comprising a logic member (17) making it possible to inhibit the simultaneous closure state of two nozzles of a pair.

2. Propulsion according to claim 1, characterized in that the slide elements (9, 10) are diametrically opposed slides which include a mechanical safety means (20) for limiting the relative displacement of said slides.

3. Propulsion according to claim 2, characterized in that the mechanical safety means (20) of the slides of the valves (7, 8) is formed by hooks (24, 25) located at the facing ends of the slides and engaging in each other.

4. Propulsion according to claim 2, characterized in that the mechanical safety means (20) of the slides (9,10) of the valves (7, 8) is formed a mechanical retractable coupling.

5. Propulsion according to claim 1, characterized in that the solid propellant (3) is a composite propellant.

# FIG_1

# FIG_4-a

# FIG_4-b

# FIG_2

# FIG_3

# FIG_5-a

# FIG_5-b

# FIG_6-a

# FIG_6-b

# FIG_7